# EUROPEAN PATENT APPLICATION

(11) **EP 1 584 238 A1**
(43) Date of publication of application: **12.10.2005**
(21) Application number: 05251606.9
(22) Date of filing: 17.03.2005
(51) Int. Cl.: A21D 13/00, B65D 81/34

(54) **Reheatable frozen sandwiches**

(30) Priority: 07.04.2004 US 819373
(71) Applicant: KRAFT FOODS HOLDINGS, INC., Illinois 60093 (US)
(72) Inventor: Howard, Walter, Libertyville Illinois 60048 (US); Mendoza, Jocelyn, Round Lake Illinois 60073 (US); Morris, Julie, Chicago Illinois 60646 (US)
(74) Representative: Smaggasgale, Gillian Helen

(57) **Abstract**

Sandwich constructed with an edible filling including meat, cheese, and a central disposed between toasted bread slices, in which the toasted bread slices remain pleasant and crisp in texture even after the sandwiches are frozen and reheated.

## Description

### Field of the Invention

This invention relates to food products, and more particularly to reheatable frozen sandwiches.

### Background of the Invention

Sandwiches are often made by spreading a condiment such as mayonnaise or mustard on a first slice of bread, then stacking layers of meat, cheese and other components thereon, then placing a second slice of bread on top. Reheatable frozen sandwiches have been assembled with meat, cheese, condiments and other components filled between toasted bread slices. Some parts of such frozen sandwiches may heat relatively slowly in microwave ovens. For instance, meat layers may be subject to slow reheating due to the presence of ice crystals formed from frozen moisture content in one or more of the various sandwich components. The ice crystals are generally transparent to microwave energy and do not effectively absorb it. However, as the sandwich starts to warm up and the ice melts, the resulting water within the filling, which is highly polar, as well as ionic molecules such as salt molecules in the condiment, tend to interact significantly with microwave energy. This induces such components to more rapidly heat up and makes them more prone to migrate into adjoining components before other components in other filling layers, such as meats located centrally within the sandwich, are reheated sufficiently. Controlled, uniform heating of diverse edible filling components within a frozen sandwich thus tends to be difficult.

When a moisture-containing filling is placed in direct contact with a toasted bread slice component, the bread crumb portions of the toast are prone to gain moisture content from the filling during reheating of the frozen sandwich in a microwave oven. The moisture pick-up by the bread slice from the filling can adversely impact the textural qualities of the bread. For example, moisture gains in the bread slice may result in the bread becoming soggy and losing much of its desirable original textural character. This may be objectionable to consumers.

There is a need for more uniform heatability and reduction of moisturization of bread components of frozen sandwiches upon reheating for consumption. As will become apparent from the descriptions that follow, the invention addresses this need as well as providing other advantages and benefits.

### Summary of the Invention

The invention provides a sandwich comprising an edible filling having diverse edible components such as protein, cheese, and condiment layers, interposed between toasted bread slices, which has improved heating and moisture migration control. In particular, moisture migration from a high moisture condiment into the toasted bread slices is inhibited such that toasted bread slices may remain crisp in texture after the sandwich is frozen and reheated. The edible filling of the sandwich also may be more capable of reheating more rapidly and uniformly from a frozen state while controlling migration of moisture from a condiment layer.

In one embodiment, the sandwich comprises a meat-containing layer and a cheese-containing layer disposed on each side of a centrally located condiment layer. Thus, the condiment layer component is positioned within the edible filling between meat and cheese layers, and isolated from the toasted bread slices of the sandwich. This helps to reduce the potential for moisture gain in the toasted bread slices due to moisture migrating from the condiment layer during frozen sandwich reheating. This structural isolation of a high moisture condiment layer from the toasted bread slices in the sandwich construction helps keep the toasted bread slices crisp upon reheating the sandwich from a frozen state.

In one embodiment, meats having a high degree of water binding capability, i.e., they bind or hold water well after thawing such that they have minuscule or essentially no free (unbound) moisture observable thereon on standing, are used in the edible filling, wherein it is preferable to position the meat-containing layer next to a toasted bread slice in the outer portions of the sandwich, and position a cheese-containing layer between the meat-containing layer and the condiment layer. Preferably, this sequence of components is provided on each side of the condiment in sandwiches incorporating meat having a high degree of water binding capability in combination with cheese and high moisture condiment. In this sandwich construction, the meat-containing layers have a greater opportunity to heat up rapidly as they are placed at the outer regions of the sandwich. In addition, the high lipid content of the cheese layers also may tend to assist the heating of the meat component from the inside out.

In another embodiment, meats having a low degree of water binding capability, i.e., they bind or hold water loosely after thawing such that free moisture appears thereon on standing that is available to migrate into an adjoining layer, are used in an edible filling of a reheatable frozen sandwich on each side of a centrally located condiment layer. In this embodiment, it is preferable to juxtapose a cheese-containing layer on the outside of each meat slice next to a toasted bread slice and provide a particulate farinaceous material layer between the meat slice and cheese-containing layer. A meat-containing layer having a low degree of water binding capability is thus disposed between the particulate farinaceous material layer and the condiment layer on each side of the condiment layer. Preferably, the particulate farinaceous material comprises a moisture binder such as instantized vegetable starch, which may be applied as a dusting on a side of the cheese-containing layer. The particulate farinaceous material helps to create a moisture-trap and barrier between the inner layers (comprising meat having a low degree of water binding capability and condiment layers), and the outer layers (comprising cheese and toasted bread slices).

In each embodiment, the components and the moisture contents are selected so that unacceptable variations in reheat times are avoided.

### Brief Description of the Drawings

FIG. 1 is a flow chart of a process for providing a frozen, reheatable sandwich product according to an embodiment of the invention.
FIG. 2 is an end view of a standard sandwich assembly.
FIG. 3 is an end view of a sandwich assembled according to an embodiment of the present invention.
FIG. 4 is an end view of a different sandwich constructed according to another embodiment of the present invention.

The figures are not necessarily drawn to scale. Similarly numbered elements in different figures represent like features unless indicated otherwise.

### Detailed Description of the Preferred Embodiments

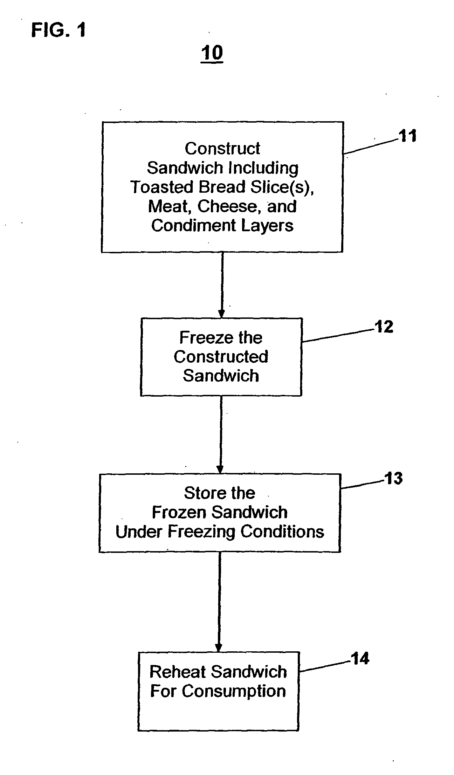

Referring to FIG. 1, a general process **10** is shown for providing a frozen, reheatable sandwich product according to an embodiment of the invention.

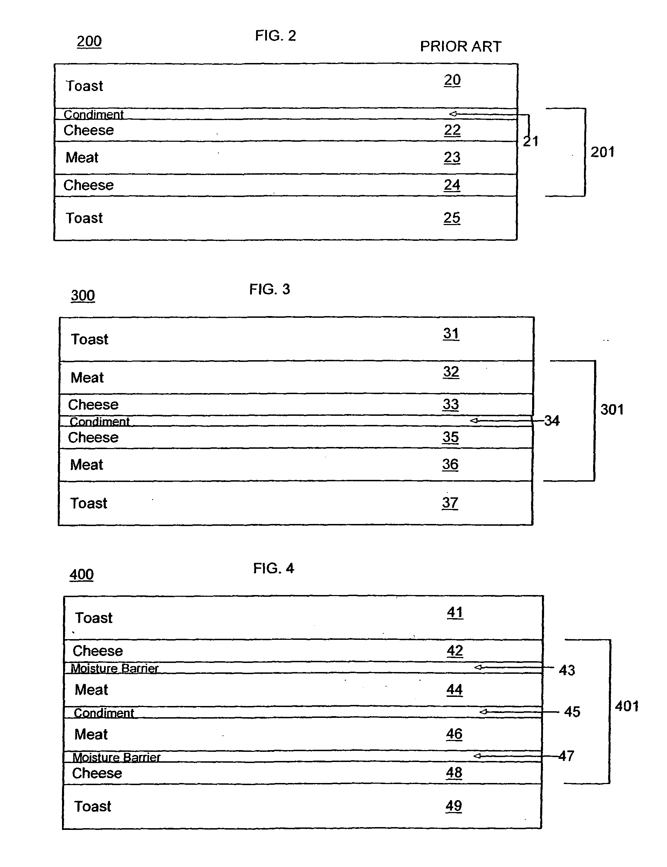

Generally, a sandwich is assembled including toasted bread slices that enclose an edible filling comprising a sequence of layers of different types of food layers (step **11**). In some embodiments, the edible filling includes meat, cheese, and one or more condiments. In other embodiments, a single toasted bread slice can be folded over an edible filling. The meat filling may also comprise or be replaced by a different protein source, such as a soy product. A standard sandwich assembly and several preferred sandwich assemblies according to embodiments of the present invention are described in more detail with reference to FIGS. 2-4 discussed *infra*.

Referring still to FIG. 1, in step **12** the assembled sandwich is frozen for stable storage. In general, a freezing temperature of approximately 32°F (0°C) or lower is used. The freezing procedure freezes all moisture-bearing components of the sandwich, such as the bread slices and edible fillings containing moisture. In step **13**, the frozen sandwiches can be stably handled, transported, and stored under freezing conditions for an extended period of time without experiencing any significant deterioration in food quality. In step **14**, the frozen sandwiches are reheated for consumption. The reheating step is conducted in a manner that ensures that the sandwich is completely thawed, and that the sandwich components are heated to a temperature suitable for consumption.

FIG. 2 shows one standard type of sandwich **200** constructed with an edible filling **201** having an edible filling **201** placed between two toasted bread slices **20** and **25**. A high moisture condiment **21** placed in direct contact with a toasted bread slice **20**, while inner cheese layers **22**, **24** and an interposed meat layer **23** are disposed more centrally. The high moisture condiment **21** carries both water (polar molecules) and various salts (ionic molecules), which means it tends to rapidly heat up when in a liquid state, which tends to lead to migration of moisture into the adjoining bread slice. The moisture gain in the toast from the high moisture condiment eventually will render the toasted bread slice less palatable as it becomes less crisp and or soggy. Generally, when a sandwich is reheated, the bottom bread slice (i.e., the bottom slice during sandwich reheating) is most susceptible to picking up moisture. Migration of moisture from the meat and condiments during reheating tends to mainly follow gravity.

Referring to FIG. 3, in one embodiment of the present invention a sandwich **300** has an edible filling **301** placed between two toasted bread slices **31** and **37**. Edible filling **301** comprises meat layers **32** and **36** having a high degree of water binding capability. These meat layers bind or hold water well after thawing the sandwich such that they have minuscule or essentially no free (unbound) moisture observable thereon on standing. The edible filling **301** also includes cheese layers **33** and **35** located on the inner sides of the respective meat layers, and a centrally located high moisture condiment layer **34**. For purposes herein, a "high-moisture" condiment, or other "high moisture" sandwich component, refers to a sandwich component containing a total moisture content of at least about 14 wt.% (as combined liquid, frozen and or vapor moisture content). The edible filling also may include additional layers or materials incorporated into other edible layers comprising one or more of vegetables, fruits, seasonings, food additives, and other processed foods (not shown).

The edible filling **301** is constructed in such a way as to place the high moisture condiment **34,** and any optional other high moisture components (e.g., vegetables), in the central region of the sandwich **300** as physically spaced from the toasted bread slices **31** and **37** by at least one intervening filling component having lower moisture content and water activity than the condiment. The resulting sandwich assembly is frozen, and, if applicable, made ready for distribution and reheating.

Preferably, this sequence of components is provided on each side of a high moisture condiment in sandwiches incorporating meat or other high animal or vegetable protein product having a high degree of water binding capability in combination with high moisture condiment and cheese or similar dairy product. The edible filling having this construction of layers significantly reduces and retards moisture gain and sogginess development that otherwise tends to occur in toasted bread slices having adjacent high moisture condiment when frozen for storage and later reheated for consumption. In particular, the toast slices remain crisp and pleasantly chewable, and not soggy, after subsequently being frozen for stable storage and later reheated for consumption. For purposes herein, "crisp" means that the toast is firm but easily broken or crumbled during consumption, and "soggy" means that the toast has a moist feel to the touch, from a textural standpoint. A crisp toast is more palatable and has a more pleasing sensory perception to a consumer than a soggy toast.

In one embodiment, the bottom toasted bread slice in the sandwich picks up no more than about 50 wt.%, particularly about 5 to about 50 wt.%, and more particularly about 10 to about 33 wt.%, additional weight as moisture gain during reheating, such as during reheating the frozen sandwich to at least room temperature (e.g., 72°F) or warmer. The "bottom" slice refers to the bread slice located at the bottom of the sandwich during reheating. The amount of moisture pick-up in the toast may be calculated by measuring the weight of a slice of toast alone after the sandwich is assembled and frozen, and the weight of the same slice after reheating the frozen sandwich, and the moisture pick up in the slice can be calculated, as a percentage, as: (the final slice weight less the original slice weight/original slice weight) times 100.

The edible filling also has a construction of layers which may interact with microwave energy more efficiently so that the edible filling of the sandwich may be rapidly heated up in a more controlled and uniform manner while controlling migration of the moisture content from the high moisture condiment layer. In this sandwich construction, the meat-containing layers having a high degree of water-binding capability have a greater opportunity to heat up rapidly as they are placed at the outer regions of the sandwich. In addition, the high lipid content of the cheese layers also may tend to assist the heating of the meat component from the inside out of the sandwich. The reheated frozen sandwiches prepared according to this embodiment can be perceived by consumers as being more tender, especially around the edges of the sandwich, and can achieve a higher reheat temperature within the edible filling as compared to a standard build such as that indicated in above-noted comparison sandwich shown in FIG. 2.

Referring to FIG. 4, in another embodiment of the present invention a sandwich **400** has an edible filling **401** placed between two toasted bread slices **41** and **49**. Edible filling **401** comprises meat layers **44** and **46** which have a low degree of water binding capability, i.e., they bind or hold water loosely after thawing such that free moisture appears thereon on standing that is available to migrate into an adjoining layer. Edible filling **401** also includes cheese layers **42** and **48**, and high moisture condiment layer **45**.

In this embodiment, the cheese layers **42** and **48** are placed in direct contact with the toasted bread slices **41** and **49**, instead of the meat layers having a low degree of water binding capability. The meat layers **44** and **46** are located closer to the high moisture condiment **45** in this sandwich build. In addition, moisture barrier layers or films **43** and **47** are interposed between the cheese and meat layers. The moisture barriers **43** and **47** comprise a solid particulate farinaceous material that is a moisture-binder. The assembled sandwich **401** may be frozen for stable storage until reheated for consumption. The moisture barriers provide an initial moisture trap to impede moisture migration from the meat and high moisture condiment layers towards the outer cheese layers and toast thereafter during reheating. Sandwiches **401** generally constructed according to scheme of FIG. 4 also have the advantages and benefits as described above in reference to the sandwich **301** illustrated in FIG. 3.

Sandwiches constructed in the manners described above with reference to FIGS. 3 and 4 can interact with microwave energy more efficiently, such that the sandwich, including the edible filling components such as meat, may heat more rapidly to a higher temperature than a standard build such as constructed in accordance with above-noted FIG. 2. It is thought that the microwave energy may interact with the condiment when located at the center of sandwich in a preferential manner and creates heat, which causes the center of the sandwich to heat more rapidly and to a higher temperature than if the condiment were placed on the outside of the sandwich in contact with the bread. Also, the moisture mass of a high moisture condiment is kept away from direct contact with the slice of pre-toasted bread, such that condiment moisture is prevented from readily migrating into bread slices. This permits the toasted bread to retain more of its desirable original crisp textural qualities without getting soggy from undue moisture content.

A high moisture condiment used in sandwiches constructed according to embodiments of this invention may be ranch dressing, vinaigrette dressing, pickle relish, catsup, barbecue sauce, mayonnaise, butter, margarine, honey, olive oil, canola oil, salad dressing, horseradish sauce, and so forth, and combinations thereof. The moisture contents of these high moisture condiments may range from about 14 to about 90. For example, and not as limiting, moisture contents of various condiments may be as follows: approximately 16-18 wt.% for mayonnaise; approximately 36-38 wt.% for ranch dressing; approximately 58-62 wt.% for barbecue sauces; and approximately 85-90 wt.% for mustard.

Instead of, or in addition, to the high moisture condiment, dry condiments also may be included in one ore more edible filling layers of the sandwich. These dried dressings may be, e.g., a dry mix of Good Season's Italian Dressing, or other dressings available in dry mix form. Locating dry condiments, especially as enclosed with cheese layers, centrally within the edible filling also may assist reheating low-moisture meat layers located immediately next to toast from the inside out, particularly in the instance of low-moisture meat containing sandwiches.

The type of cheese filling that may be used is not particularly limited. A cheese filling may be used in a layered form convenient for incorporation into the sandwich, such as sliced, shredded, shaved, flaked, powdered, crumbed, slabbed, creamed, and so forth. The sliced forms of the cheese may include holes (eyes), or not.

The cheese type, for example, may be process cheese, cheddar cheese, Swiss cheese, American cheese, Provolone cheese, mozzarella cheese, Parmesan cheese, blue cheese, Monterey Jack cheese, Romano cheese, cream cheese, Havarti cheese, Gouda cheese, Muenster cheese, Asiago cheese, Gorgonzola cheese, and combinations of different cheeses.

The water content and water activity of the cheese filling may vary greatly depending on the type of cheese selected. In general, the cheese filling may contain about 40 to about 45 wt.% moisture.

The meat filling may be in a sliced, shaved, shredded, chopped, or pre-cooked in a patty shape, or other convenient form, for inclusion as a filling layer in the sandwich. The type of meat filling that may be used is not particularly limited. The meat may be beef (e.g., roast beef, barbecued beef, steak, hamburger, etc.); poultry (e.g., chicken breast, barbecued chicken, turkey breast, turkey burger, chicken salad, etc.); pork (e.g., ham, barbecued pork, ham salad, etc.); fish (e.g., tuna, tuna salad, lox, etc.); egg products (e.g., pre-cooked egg patties, etc.). The meat filling also may be processed meats like bacon, sausage, bologna, olive loaf, pepperoni, salami, corned beef, pastrami, liverwurst, and so forth.

Soy products may be used as a protein source in combination with the meat filling, or alternatively in place thereof in the sandwich filling. For example, soy meal patties and the like may be used to form a protein layer or layers in the sandwich filling in place of meat filling(s). Egg products, such as egg patties, also may be used as an animal protein filling layer in combination with the above-described types of meat filling, or alternatively in place thereof in the sandwich filling.

The water content and water activity of the meat filling may vary greatly depending on the type of meat selected. For instance, leaner cuts of meat generally contain less water content than less lean cuts, but the former may be more expensive. For example, processed luncheon meats or deli style meats that may used in the sandwich constructions described in embodiments herein may comprise about 70 to about 80 wt.% moisture.

The FIG. 3 sandwich build scheme may be more effective in maintaining toast crunchiness after sandwich freezing and reheating as the cuts of meat used become leaner. However, the FIG. 4 sandwich build scheme may be more effective in maintaining toast crunchiness after sandwich freezing and reheating as the cuts of meat used become less lean and contain increased water content.

The type of bread used as the source of the bread slices used in embodiments of the present invention is not particularly limited, as long as it is available in shapes from which slices may be prepared so to have generally flat opposite faces, i.e., the crumb, and a peripheral side edge. The bread may have a crust bounding at least part of the crumb, or the bread may be crustless. In one preferred embodiment, a crust completely surrounds the crumb of the bread slice.

The three basic types of breads that may be used are white, brown, and whole meal. The bread shapes from which slices can be obtained, include, for example, tin, sandwich loaf, split tin, farmhouse, batch loaf, plait, Coburg, bloomer, Vienna, cottage, and barrel. The particular bread types may be, for example, white, brown, sourdough, rye, oat bran, Hawaiian, pumpernickel, baguette, soda, corn, foccacia, naan, and so forth.

The edible solid particulate farinaceous material used to form the above-noted moisture barrier layers or films should be a moisture-binding material. In one embodiment, the moisture barrier layers or films comprise an edible, moisture-bindable farinaceous material applied as a dry, flowable particulate form. Preferably, the farinaceous material comprises starch, and more preferably instantized starch. In plants, starch is a reserve carbohydrate polymer, deposited as granules in the seeds, tubers or roots. In their native state, these starch granules differ in size, shape, amylose content, and gelatinization temperature, depending on the plant source. Native corn starches, for example, may be obtained from waxy maize corn starch or common corn starch. Native corn starch granules, for instance, are often approximately 15 microns in size and have round to polygonal shapes, although they are not limited thereto. Corn starch may be obtained by grinding the white hearts of corn kernels into a silken powder. Pregelatinized (pregel) starches are modified food starches which have been cooked, dried, and ground into power. They are referred to as "instantized" starches in the food arts and for purposes herein.

The farinaceous material used as the moisture barrier material independently may be selected from the group consisting of corn starch, wheat starch, potato starch, tapioca starch, rice starch, and combinations thereof. Preferably, instantized versions of one or more of these starch types are used in the moisture barrier layers.

The application rate of the instantized starches to another edible filling layer, such as a cheese layer, generally ranges from about 2 to about 8 mg/cm². It may be applied to at least one side of the cheese layer (or optionally both) at a sufficient rate to impart a fine powdered (dusted) appearance thereon. The fine film of starch associates with a cheese layer surface and clings to it during the sandwich assembly. Preferably, the application rate of the instantized starch to a cheese layer surface should be adequate to permit moisture binding of substantially all moisture migrating out of the meat layer and or condiment towards the cheese layer and the adjoining toast.

An optional vegetable filling that may be included comprise, for example, onions, lettuce, watercress, tomato, peppers, garlic, bean sprouts, cucumber, zucchini, potato, kale, basil, and so forth, and combinations thereof.

The sandwich breads and fillings also can be seasoned, such as with salt, pepper, oregano, hot pepper flakes or spreads, onion powder, garlic powder, sesame seeds, poppy seeds, cinnamon, and so forth, and combinations thereof. Food additives, such as preservatives, flavorings, colors, emulsifiers, soya flour, and so forth, can be included in or applied to one or more of the fillings.

Fruits, such as olives, avocado, pineapple, raisins, and so forth, may be included as a filling. Other types of processed foods also may be used as a sandwich filling, such as peanut butter, fruit jams or spreads, and so forth.

In one embodiment, the sandwich assembled with edible filling layers in the general sequence of FIG. 3 comprises a turkey having a high degree of water binding capability and Ranch dressing sandwich comprising a build sequence of components of: toast/turkey/cheese/ranch dressing/cheese/turkey/toast. In another example, the sandwich is a ham having a high degree of water binding capability and cheese sandwich comprising a build sequence of components of: toast/ham/cheese/onions/barbecue sauce/cheese/ham/toast. Sandwich varieties of the general sequence of FIG. 4 include, for example, a ham having a low degree of water binding capability and cheese sandwich having a build sequence of components of: toast/cheese/moisture barrier/ham/barbecue sauce/ham/moisture barrier/cheese/toast. Other sandwich varieties of the general sequences of FIG. 3 and FIG. 4 are also contemplated.

This invention is most advantageously applied to sandwiches constructed with toasted sliced bread in which each toasted bread slice has a crust extending around the crumb, which has two opposite generally flat faces, although it is not limited thereto. Breads for subs, buns, bagels, and croissants, which can be sliced in half to provide two halves but lack an edge crust between two separate faces, also may be used. Similarly, the breads used in this invention also may include flat bread wraps, such as pita, tortilla, chapattis, and the like.

Bread slices that will be used in constructing a sandwich generally are first toasted. Toasting generally causes moisture loss in bread slices. In a preferred embodiment of the present invention, moisture loss in the bread slices is minimized during toasting by browning a side of the bread using higher heating temperatures and shorter heating times than used in standard procedures.

For purposes herein, "toasted" means a bread slice is heated until browned by a heating system. A "browned" bread slice is browner in color and contains less moisture than before heat treatment. The heating method used to brown the slice of bread is not limited to any particular one. The toasting of the bread slice can be done such as by grilling, close proximity radiant heating, convective heating means, or combinations of these. For example, grilling or impingement oven heating techniques may be used to brown the bread slice. "Grilling" means a bread slice is heated at least in part with conductive heat until it is browned by placing the bread slice directly in contact with a solid flat grill or an upraised gridiron, or alternatively a barred grill supports the bread slice while it is heated. It may be accomplished by grilling, toasting, or comparable cooking techniques. Rapid grilling methods are preferred as they further enhance the eating quality of the sandwich.

For purposes of embodiments of the present invention, bread slices are toasted on at least one side thereof. High temperature rapid heating procedures, such as described herein, may be used to toast one side of the bread slice. In an alternate embodiment, both sides of a bread slice can be toasted, although this is not required. A toasted side of the bread slice generally is used as the exposed (outer) side of the bread slice once it is assembled into a sandwich, as described in more detail below.

In one embodiment, bread slices having a thickness of about 0.5 to about 1.0 inch may be toasted rapidly until browned on at least one side to an acceptable shade of brown color in less than about 60 seconds, and generally in the range of about 30 to about 60 seconds, using a hot grill surface maintained at a temperature greater than about 475°F, and particularly greater than about 500°F, and more particularly greater than about 515°F. Toasting temperatures of about 300 to about 380°F may be applied for multiple minutes of heating, although the longer toasting cycles may further dehydrate the bread leaving a less tender toasted bread product. Toasting also can be accomplished in high temperature, rapid heating cycle arrangements such as, for example, radiant heating element, radiant heating lamp, and/or convective oven arrangements.

The method used to reheat the frozen sandwiches is not particularly limited. It is preferred to use a rapid cooking oven, including, for example, a convection oven, a radiant heat oven, a microwave oven, or a combination or hybrid oven. For example, commercial rapid cook ovens that combine convection with microwave for high-speed cooking are suitable. For instance, a modified high-velocity impingement system may be used that propels hot air directly down onto the food, then pulls it around and underneath the product, which is also coupled with a microwave component to speed the cooking process. Another exemplary hybrid cooking oven combines quartz halogen cooking with microwave. These combination ovens may be stand alone units or alternatively may be incorporated into a vending machine that stores the sandwiches under frozen conditions until selected by a customer, at which point the sandwich is reheated and dispensed for consumer consumption.

The examples that follow are intended to further illustrate, and not limit, embodiments in accordance with the invention. All percentages, ratios, parts, and amounts used and described herein are by weight unless indicated otherwise.

### Examples

### Example 1:

Different sandwich builds including condiment, meat, and cheese fillers placed between pre-toasted bread slices were constructed, frozen, and reheated, to evaluate the effects of the sandwich build on the textural quality of the toast in the reheated sandwich. Generally, a condiment was placed centrally within and spaced away from the bread slices in one modified sandwich build, while a standard sandwich build evaluated for comparison placed the condiment directly on one of the toast bread slices.

Ham sandwiches were evaluated which were built with ham, cheese and barbecue sauce fillings. Two different modified ham sandwich build schemes were evaluated, depending on the moisture binding capability of the ham filling used. Turkey sandwiches built with turkey, cheese and ranch dressing, having a modified sandwich build also were evaluated. For comparison, standard-build versions of these sandwiches also were prepared and evaluated. The Standard Build scheme and the two Modified Build schemes used in constructing various ones of the evaluated sandwiches are described below.

### Standard Sandwich Build:

(a) Grilled bread slice - toasted side out (standard grilled)
(b) Condiment(s) (for ham sandwich: BBQ sauce, onion, sugar blend; for turkey sandwich: ranch dressing)
(c) Cheese slice
(d) Meat filling
(e) Cheese slice
(f) Grilled Bread slice - toasted side out (standard grilled)

### Modified Sandwich Build 1 (Meat - high moisture binding capability):

(a) Grilled bread slice - toasted side out
(b) Meat filling
(c) Cheese slice
(d) Condiment(s) (for ham sandwich: BBQ sauce, onion, sugar blend; for turkey sandwich: ranch dressing)
(e) Cheese slice
(f) Meat filling
(g) Grilled Bread slice - toasted side out

### Modified Sandwich Build 2 (Meat - low moisture binding capability):

(a) Grilled bread slice - toasted side out
(b) Cheese slice
(c) Particulate farinaceous moisture barrier
(d) Meat filling
(e) Condiment(s) (for ham sandwich: BBQ sauce, onion, sugar blend; for turkey sandwich: ranch dressing)
(f) Meat filling
(g) Particulate farinaceous moisture barrier
(h) Cheese slice
(i) Grilled bread slice - toasted side out

For Modified Sandwich Builds 1 and 2, the total amount of meat used was divided approximately equally between the two meat-filling layers, although that is not required.

The various modified and standard build ham and turkey sandwiches assembled had the following specific ingredients.

| Honey Ham and Cheese Sandwich 1A | |
|---|---|
| Component | Content Per Sandwich (grams) |
| Oscar Mayer® Honey Ham (#02961) | 56 |
| Alpha® Baking Club Yellow bread (#13008)(ungrilled) | 87 (2 slices) |
| ChedaSharp (Kraft, 160 Slice Pullman; #70133) | 27 |
| Bull's Eye® Honey Smoke BBQ sauce (Kraft, #39175) | 9 |
| Canola oil | 1 |
| Margarine (Land-O-Lake®) | 1 |
| Brown sugar (Domino®) | 1 |
| Grilled onions (3/8 inch Jon-Lin® IQF) | 5 |
| Instantized tapioca Starch (if used) | 0.5 |
| | 187 (Total grams,w/o starch) |
| | 187.5 (Total grams, with starch) |

| Turkey Ranch and Cheese Sandwich 1A | |
|---|---|
| Component | Content Per Sandwich (grams) |
| Oscar Mayer® Oven Roasted Turkey breast (#5666) | 45 |
| Alpha® Baking Rolled Oat bran (#12174)(ungrilled) | 120 (2 slices) |
| Hot pepper cheese (Churney brand; #78008) | 16 |
| Sharp Cheddar (Kraft brand, 160 S1 Pullman; #70133) | 14 |
| Ranch Dressing (Kraft brand; #64354) | 14 |
| Canola Oil | 1 |
| Margarine (Land-O-Lake®) | 1 |
| | 211 (Total grams) |

The toasted bread slices used in the construction of these various sandwiches were prepared in the following manner.

The bread slices were toasted by grilling the bread slices according to one of two following general techniques:
(1) Standard grilling was done using a grill surface temperature of approximately 375°F. The bread slices had a light spray of canola oil applied to the surface (side) of the bread slice that was to be grilled. The bread slices were grilled on that one side for about 5 minutes to a golden brown color.
(2) Rapid grilling was done using the grilling surface set to a very high temperature of greater than 515°F (the highest temperature measurable by the thermometer used), and spraying the surface of the bread slice to be toasted prior to grilling with canola oil. This technique causes the side of the bread slice that had received the canola oil spray to toast in less than 60 seconds.

The grill apparatus used for the standard and rapid grilling arrangements was a Vulcan grill, manufactured by Vulcan.

Table 1 sets forth the grill temperatures measured at nine different grill locations at or near where the bread slices were supported during toasting for the separate standard and rapid grilling arrangements for toasting the bread slices. Tables 2 and 3 indicate the moisture content measurement results obtained for six bread slice samples grilled for each bread type and under each grilling arrangement.

**Table 1**

| STANDARD GRILLING: Grill Surface Temp, (°F) | | | | RAPID GRILLING: Grill Surface Temp, (°F) | | | |
|---|---|---|---|---|---|---|---|
| Grill location→ ↓ | LEFT | CENTER | RIGHT | Grill location→ ↓ | LEFT | CENTER | RIGHT |
| REAR | 345.0 | 360.0 | 362.0 | REAR | >515 | >515 | >515 |
| CENTER | 344.0 | 377.0 | 375.0 | CENTER | >515 | >515 | >515 |
| BOTTOM | 321.0 | 335.0 | 345.0 | BOTTOM | 515.0 | >515 | >515 |

**Table 2**

| **Grilling Technique** | **Bread Type** | **Slice Thickness (inch)** | **Wgt. (g/slice)** | **Wgt. (g) After Grilling** | **Time on Grill (Min:sec)** | **Moisture Loss (%)** | **Ave. Moisture Loss (%)** |
|---|---|---|---|---|---|---|---|
| Standard | Club Yellow | 0.75 | 41.4 | 37.9 | 5:00 | 8.45 | |
| " | " | " | 43.1 | 39.4 | " | 8.58 | |
| " | " | " | 46.0 | 41.9 | " | 8.91 | |
| " | " | " | 42.2 | 38.3 | " | 9.24 | |
| " | " | " | 43.6 | 39.6 | " | 9.17 | |
| " | " | " | 46.9 | 43.3 | " | 7.68 | 8.67 |
| Standard | Rolled Oat | 0.75 | 59.6 | 55.7 | " | 6.54 | |
| " | " | " | 59.5 | 54.4 | " | 8.57 | |
| " | " | " | 67.4 | 62.2 | " | 7.72 | |
| " | " | " | 64.7 | 59.7 | " | 7.73 | |
| " | " | " | 65.1 | 60.3 | " | 7.37 | |
| " | " | " | 67.9 | 63.0 | " | 7.22 | 7.52 |

**Table 3**

| **Grilling Technique** | **Bread Type** | **Slice Thickness (inch)** | **Wgt. (g/slice)** | **Wgt. (g) After Grilling** | **Time on Grill (Min:sec)** | **Moisture Loss (%)** | **Ave. Moisture Loss (%)** |
|---|---|---|---|---|---|---|---|
| Rapid grilling | Club Yellow | 0.75 | 42.1 | 40.2 | 0:35 | 4.51 | |
| " | " | " | 48.1 | 45.4 | " | 5.61 | |
| " | " | " | 46.7 | 44.8 | " | 4.07 | |
| " | " | " | 46.7 | 44.1 | " | 5.57 | |
| " | " | " | 44.0 | 42.0 | " | 4.55 | |
| " | " | " | 45.0 | 42.5 | " | 5.56 | 4.98 |
| | | | | | | | |
| Rapid grilling | Rolled Oat | 0.75 | 66.5 | 63.7 | 0:40 | 4.21 | |
| " | " | " | 61.9 | 59.7 | " | 3.55 | |
| " | " | " | 62.5 | 60.8 | " | 2.72 | |
| " | " | " | 63.4 | 61.5 | " | 3.00 | |
| " | " | " | 69.6 | 67.8 | " | 2.59 | |
| " | " | " | 66.1 | 64.0 | " | 3.18 | 3.21 |

As shown by the results in Tables 2 and 3, the moisture loss of the breads toasted according to the rapid grilling technique (Table 3) was significantly less than the bread slices toasted by a standard heat treatment (Table 2).

Following grilling and before sandwich assembly, the toasted bread slices were rolled so that each edge of the bread was compressed by approximately 50% of its original thickness. Following compression, a light film of margarine oil was brushed onto the edge of the bread. Thereafter, sandwiches were assembled according to the constructions described above using both types of toasted breads.

### Freezing and Storage

Following sandwich assembly, the sandwiches were packaged and placed in storage in a freezer at about 0°F and stored for approximately 24 hours until frozen.

### Sandwich Reheat and Evaluation

After storage under freezing conditions, the frozen turkey sandwiches made with Rolled Oat Bran bread were reheated from frozen conditions using a combination oven, which was a Garland Mealstream V unit having concurrent convection and microwave heating functionalities. The convection oven setting was 480°F and the microwave setting was 100% (1400 watts). The core temperature of the various sandwiches was measured in the central filling region thereof at different heating times, and the product quality was assessed from an organoleptic standpoint. The core temperature was measured via probe at the geometric center of the sandwich. A core temperature of at least 140°F was the target value for these studies.

In Table 4, "Standard Preparation" identifies a sandwich made using standard sandwich assembly and standard grilling practices; while "Modified Preparation" identifies a sandwich made in accordance with the sandwich assembly of Modified Sandwich Build 1 and in which the rapid grilling method was used for toasting the bread slices.

**Table 4**

| Turkey, Standard Preparation | | Turkey, Modified Preparation | | Ham, Standard Preparation | | Ham, Modified Preparation | |
|---|---|---|---|---|---|---|---|
| Time Out of Oven, min:sec | Temp. Out of Oven, °F | Time Out of Oven, min:sec | Temp. Out of Oven, °F | Time Out of Oven, min:sec | Temp. Out of Oven, °F | Time Out of Oven, min:sec | Temp. Out of Oven, °F |
| 0:15 | 87 | 0:15 | 100 | 0:15 | 85 | 0:15 | 132 |
| 0:30 | 95 | 0:30 | 107 | 0:30 | 92 | 0:30 | 145 |
| 1:00 | 111 | 1:00 | 132 | 1:00 | 107 | 1:00 | 159 |
| 1:30 | 122 | 1:30 | 143 | 1:30 | 115 | 1:30 | 167 |
| 2:00 | 129 | 2:00 | 149 | 2:00 | 122 | 2:00 | 170 |
| 2:15 | 132 | 2:15 | 150 | 2:15 | 126 | 2:15 | 170 |
| 2:30 | 134 | 2:30 | 152 | 2:30 | 128 | 2:30 | 172 |
| 2:45 | 136 | 2:45 | 152 | 2:45 | 130 | 2:45 | 172 |
| 3:00 | 138 | 3:00 | 154 | 3:00 | 130 | 3:00 | 174 |
| 3:15 | 140 | 3:15 | 154 | 3:15 | 132 | 3:15 | 174 |
| 3:30 | 141 | 3:30 | 156 | 3:30 | 133 | 3:30 | 174 |
| 3:45 | 143 | 3:45 | 156 | 3:45 | 133 | 3:45 | 175 |
| 4:00 | 143 | 4:00 | 157 | 4:00 | 135 | 4:00 | 175 |
| 4:15 | 145 | 4:15 | 158 | 4:15 | 135 | 4:15 | 175 |
| 4:30 | 145 | 4:30 | 158 | 4:30 | 137 | 4:30 | 175 |
| 4:45 | 147 | 4:45 | 160 | 4:45 | 137 | 4:45 | 176 |
| 5:00 | 147 | 5:00 | 160 | 5:00 | 138 | 5:00 | 176 |
| 5:15 | 147 | 5:15 | 161 | 5:15 | 138 | 5:15 | 176 |
| 5:30 | 147 | 5:30 | 161 | 5:30 | 138 | 5:30 | 176 |

The sandwiches constructed in accordance with the teachings of the present invention attained higher core sandwich temperatures for the same heating periods as compared to the standard sandwiches. The heating time needed for the turkey sandwich product made according to an embodiment of the present invention was reduced from 1:40 minutes:seconds to 1:25 minutes:seconds, and resulted in a finished product temperature of 143 °F. Importantly, the eating quality of this sandwich, especially at the crusts of the sandwich, was significantly improved. The crusts were soft but crisp, while that of the standard build product was hard and crouton-like.

A frozen ham sandwich made with Modified Sandwich Build 1 using ham having relatively lower water binding capability was observed to have soggy toast upon reheating. The sandwich was remade in a similar manner with the modification of instead using Modified Sandwich Build 2, which eliminated the problem. These data indicated that Modified Sandwich Build 2 avoided soggy bread problems when meat fillings having relatively lower water binding capability were used together with condiment.

The heating time needed for the ham sandwich product made in accordance with teachings of the present invention also was reduced to 1:10 min:sec in order to deliver a finished product core temperature of 141°F. The same result was observed as that for the turkey sandwich in that crusts of the ham sandwich were more tender but crisp, while those of the standard build product were hard and crouton-like.

### Example 2:

A series of Turkey ranch dressing and cheese sandwiches were prepared having a sandwich construction similar to Modified Sandwich Build 1 of Example 1 with the following indicated differences. The Alpha® Baking Rolled Oat bran bread slices were replaced with different types of bread slices in the various prepared sandwiches, which were the following: Alpha® Baking Country White (5/8"; 100 g/2 slices); Alpha® Baking Wheat (90 g/ 2 slices); Alpha® Baking Multigrain (100g/2 slices); Alpha® Baking Pullman Wheat (90g/2 slices); and Alpha® Baking Deluxe 9 Grain (100g/2 slices).

The modified turkey sandwiches assembled had the following specific ingredients.

| Turkey Ranch and Cheese Sandwich 2A | |
|---|---|
| Component | Content Per Sandwich (g) |
| Oscar Mayer® Shaved Turkey breast (#56388) | 45 |
| Bread | see above (2 slices) |
| Hi-Melt Monterey Pepper Jack cheese (Kraft, #40034) | 16 |
| ChedaSharp (Kraft brand, 160 sl Pullman, #70133) | 14 |
| Ranch Dressing (Kraft brand, #64354) | 14 |

Before sandwich assembly, each of the different types of bread slices were rapid grilled on one side in a manner similar to that described in Example 1, but were not edge rolled nor edge-treated with oil after toasting. Immediately after rapid grilling several pieces of toast of a given type, the filling was inserted between a pair of the toasted bread slices, and the sandwich was placed in a resealable bag which was closed, and which then was placed in a freezer. Frozen sandwiches prepared in this manner were reheated in manner similar to that described in Example 1, and then they were wrapped in aluminum foil for five minutes before inspection and consumption. All the resulting reheated sandwiches had crisp bread slices with good firm edges, and were savory.

### Example 3:

Additional turkey ranch dressing sandwiches and honey ham and cheese sandwiches were assembled to further evaluate the effect of the filling construction on sandwich sensory properties and reheating properties upon freezing and reheating. In these samples, the turkey and ham meat fillings had relatively high water binding capabilities. Turkey ranch dressing sandwiches were prepared having a sandwich construction similar to Modified Sandwich Build 1 of Example 1 with the following indicated differences. The Alpha® Baking Rolled Oat bran bread slices were substituted with Alpha® Baking Deluxe 9 Grain bread slices.

The modified turkey sandwiches assembled had the following specific ingredients.

| Turkey Ranch and Cheese Sandwich 3A | |
|---|---|
| Component | Content Per Sandwich (g) |
| Oscar Mayer® Oven Roasted Turkey breast (#09181) | 45 |
| Alpha® Baking Deluxe 9 Grain bread | 100 |
| Hi-Melt Monterey Pepper Jack cheese (Kraft, #40034) | 16 |
| Sharp Cheddar (Kraft brand, 160 sl. Pullman, #70133) | 14 |
| Ranch Dressing (Kraft brand, #64354) | 14 |
| Corn Oil (Columbus Foods) | 1.6 |
| Extra Virgin Olive Oil (Arista Ind.) | 0.4 |

Honey ham and cheese sandwiches were prepared having a sandwich construction similar to Modified Sandwich Build 1 of Example 1 with the following indicated differences. The Alpha® Baking Rolled Oat bran bread slice was substituted with Alpha® Baking Country White bread.

The modified ham sandwiches assembled had the following specific ingredients.

| Honey Ham and Cheese Sandwich 3A | |
|---|---|
| Component | Content Per Sandwich (grams) |
| Oscar Mayer® Honey Ham (#01950) | 50 |
| Alpha® Baking Country White bread (#28172) | 100 (2 slices) |
| ChedaSharp Pullman loaf cheese (Kraft; #70135) | 19 |
| Bull's Eye® Honey Smoke BBQ sauce (#39175) | 19 |
| Brown sugar (Domino®, #01101A) | 1 |
| Grilled onions (3/8 inch Jon-Lin® IQF) | 11 |
| Corn oil (Columbus Foods) | 1.6 |
| Extra virgin olive oil (Arista Ind.) | 0.4 |

Before sandwich assembly, the surface of a bread slice to be toasted was coated prior to grilling with the corn oil and the olive oil. The bread slices for all the sandwiches assembled were slow grilled on one side similar to the standard grilling described in Example 1, and they were not edge rolled nor edge-treated with oil after toasting. The sandwiches were assembled, and were then packaged, frozen, and reheated similar to the descriptions of Example 2. All the resulting reheated sandwiches had crisp bread slices with good firm edges, and were savory.

In order to measure moisture pick levels during reheating, six additional sandwiches, designated here as samples 3-1 to 3-6, were assembled having the construction of the above-described Honey Ham and Cheese Sandwich 3A and then were frozen. The following methodology was used for moisture pick up evaluation. An assembled frozen sandwich was first weighed. Then, a slice from the assembled frozen sandwich was then removed and separately weighed. The slice was returned to the sandwich assembly, the sandwich was inserted into the microwave oven for heating with the weighed slice of bread located on the bottom side thereof. The sandwich was heated for 1 minute, 30 seconds, in a 1,000 watt microwave oven to an internal temperature of 140°F. Immediately after completing heating, the heated sandwich was weighed, and then the bottom slice of bread was separately weighed. The results are indicated in Table 5.

**Table 5**

| Sandwich ID | wt. (g) bottom slice, before heating | wt. (g) sandwich, before heating | wt. (g) bottom slice, after heating | wt. (g) bottom slice, after heating | % Moist. gain, bottom slice | % Moist. lost, sandwich |
|---|---|---|---|---|---|---|
| 3-1 | 49.9 | 196.6 | 57.9 | 188.4 | 15.9 | 4.2 |
| 3-2 | 50.6 | 191.8 | 59.4 | 184.6 | 17.3 | 3.7 |
| 3-3 | 40.0 | 178.0 | 58.6 | 170.6 | 46.6 | 4.2 |
| 3-4 | 49.1 | 193.3 | 61.7 | 186.0 | 25.6 | 3.8 |
| 3-5 | 48.4 | 183.3 | 61.1 | 175.4 | 26.2 | 4.3 |
| 3-6 | 45.7 | 200.6 | 59.6 | 194.0 | 30.5 | 3.3 |

For each examined sandwich, the sandwich as a whole lost moisture during the heating step while the bottom slice of the sandwich gained moisture.

### Example 4:

Roast beef sandwiches were prepared for evaluation. Modified Roast Beef Sandwich Build 1 and Modified Roast Beef Sandwich Build 2, described in more detail below, each were initially prepared using a process similar to that described for constructing Modified Sandwich Build 1 as described in Example 1, albeit with different specific filler components under each category of filler and a different bread type. A comparison sandwich, Standard Sandwich Build B, also was prepared having Standard Sandwich Build scheme described in Example 1, albeit with different specific filler components under each category of filler. The bread slices used were 3/4 inch thick slices of Alpha® Baking (#15013) sourdough bread (about 58 g/slice), which toasted in a similar manner as described for the bread slices in Example 1. Oscar Meyer shredded roast beef was used as the meat filling in the sandwiches evaluated.

### Standard Roast Beef Sandwich Build B:

(a) Toasted bread slice - toasted side out (standard grilled), 114 g
(b) Condiment (vinaigrette dressing), 28 g
(c) Good Season's Italian Dressing (dry mix), 2 g
(d) Shredded mozzarella cheese, 40 g
(e) Grated Parmesan, 5 g
(f) Meat filling, 70 g
(g) Land-Of-Lakes Margarine, 10 g
(h) Toasted Bread slice - toasted side out (standard grilled), 114 g

### Modified Roast Beef Sandwich Build 1:

(a) Toasted bread slice - toasted side out, 114 g
(b) 1/3 meat filling component, 25 g
(c) Shredded Mozzarella cheese, 20 g
(d) 1/3 meat filling component, 25 g
(e) Shredded Mozzarella cheese, 20 g
(f) Grated Parmesan cheese (5 g), and Good Season's Italian Dressing (dry mix) (2 g)
(g) 1/3 Meat filling, 25 g
(h) Toasted Bread slice - toasted side out, 114 g

### Modified Roast Beef Sandwich Build 2:

(a) Toasted bread slice - toasted side out, 114 g
(b) 1/2 meat filling component, 38 g
(c) Grated Parmesan cheese (5 g), Shredded Mozzarella cheese (20 g), Good Season's Italian Dressing (dry mix)(2 g)
(d) 1/2 Meat filling, 38 g
(e) Toasted Bread slice - toasted side out, 114 g

The sandwiches were frozen to a constant temperature, and then reheated in a Garland Mealstream V convection-microwave combination oven. The re-heat procedure used on the sandwiches was the following:
1) heat step #1: 350°F for 30 seconds and 50% microwave energy;
2) heat step #2: 350°F for 30 seconds and 100% microwave energy; and
3) heat step #3: 400°F for 30 seconds and 100% microwave energy.

The total re-heat time in the oven was two minutes and the heat cycle was the same for all three sandwich builds. When removed from the oven, each type of sandwich build was measured for its temperature at the sandwich core, which was located at the geometric center of the sandwich, and at an edge, which was measured in the condiment layer at a location approximately 0.5 to 1 inch in from the side of that layer. The temperature readings were recorded every 30 seconds for at least 7 minutes after exiting the oven. The results are described in Table 6.

**Table 6**

| | **Standard Roast Beef Sandwich Build B** | | **Modified Roast Beef Sandwich Build #1** | | **Modified Roast Beef Sandwich Build #2** | |
|---|---|---|---|---|---|---|
| **Time (min:sec)** | **core (°F)** | **edge (°F)** | **core (°F)** | **edge (°F)** | **core (°F)** | **edge (°F)** |
| **:30** | - | 197 | 89 | 202 | 107 | 204 |
| **1:00** | 82 | 189 | 95 | 198 | 111 | 198 |
| **1:30** | 87 | 185 | 98 | 194 | 114 | 192 |
| **2:00** | 91 | 182 | 100 | 190 | 118 | 188 |
| **2:30** | 93 | 178 | 102 | 187 | 121 | 182 |
| **3:00** | 96 | 175 | 104 | 183 | 123 | 179 |
| **3:30** | 98 | 172 | 105 | 180 | 127 | 175 |
| **4:00** | 100 | 169 | 107 | 176 | 129 | 171 |
| **4:30** | 102 | 166 | 107 | 173 | 131 | 168 |
| **5:00** | 104 | 164 | 109 | 170 | 131 | 165 |
| **5:30** | 105 | 161 | 111 | 168 | 132 | 162 |
| **6:00** | 105 | 158 | 111 | 165 | 132 | 160 |
| **6:30** | 107 | 156 | 111 | 163 | 134 | 157 |
| **7:00** | 107 | 154 | 111 | 160 | 134 | 155 |
| **7:30** | 109 | 152 | - | - | - | - |
| **8:00** | 109 | 150 | - | - | - | - |
| **8:30** | 111 | 149 | - | - | - | - |
| **9:00** | 111 | 147 | - | - | - | - |

Standard Sandwich Build B had the lowest core and edge temperatures at exit and after seven minutes standing time. Modified Roast Beef Sandwich Build 2 had the highest edge and core temperatures at exit and seven minutes standing time. Modified Roast Beef Sandwich Build 1 had intermediate readings to the results for the other two builds evaluated, and it tended to have a heat profile closer to the standard build sandwich product.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A reheatable frozen food product, comprising;
a first toasted bread slice having a first contact surface;
a second toasted bread slice having a second contact surface;
an edible filling disposed between the first contact surface of the first toasted bread slice and the second contact surface of the second toasted bread slice, wherein the edible filling comprises a plurality of edible filling layers which include:
a condiment layer having opposite sides,
a first protein-containing layer and a first cheese-containing layer disposed between one of the opposite sides of the condiment layer and the first contact surface of the first toasted bread slice, and
a second protein-containing layer and a second cheese-containing layer disposed between the other opposite side of the condiment layer and the second contact surface of the second toasted bread slice; and
a package containing said bread slices and said edible filling layers, and having instructions for microwave heating of said frozen food product thereon.

2. A reheatable frozen food product according to Claim 1, wherein the first protein-containing layer is juxtaposed to the first contact surface of the first toasted bread slice, and the first cheese-containing layer is disposed between the first protein-containing layer and the condiment layer.

3. A reheatable frozen food product according to Claim 1 or 2, wherein the second protein-containing layer is juxtaposed to the second contact surface of the second toasted bread slice, and the second cheese-containing layer is disposed between the second protein-containing layer and the condiment layer.

4. A reheatable frozen food product according to any one of Claims 1 to 3, wherein the first cheese-containing layer has opposite sides with one side thereof juxtaposed to the first contact surface of the first toasted bread slice, and a first particulate farinaceous material layer is in contact with the opposite side of the first cheese-containing layer; and the first protein-containing layer is disposed between the first particulate farinaceous material layer and the condiment layer.

5. A reheatable frozen food product according to any one of Claims 1 to 4, wherein the second cheese-containing layer has opposite sides with one side thereof juxtaposed to the second contact surface of the second toasted bread slice, and a second particulate farinaceous material layer is in contact with the opposite side of the first cheese-containing layer; and the second protein-containing layer is disposed between the second particulate farinaceous material layer and the condiment layer.

6. A reheatable frozen food product according to Claim 5, wherein the first farinaceous material layer and the second farinaceous material layer each comprise instantized starch.

7. A reheatable frozen food product according to Claim 5, wherein the first farinaceous material layer and the second farinaceous material layer are independently selected from the group consisting of corn starch, wheat starch, potato starch, tapioca starch, rice starch, and combinations thereof.

8. A reheatable frozen food product according to any one of Claims 1 to 7, wherein the condiment comprises at least about 14 wt.% moisture.

9. A reheatable frozen food product according to any one of Claims 1 to 8, wherein the condiment is selected from the group consisting of ranch dressing, mustard, vinaigrette dressing, pickle relish, catsup, barbecue sauce, mayonnaise, butter, margarine, honey, olive oil, canola oil, salad dressing, horseradish sauce, spicy pepper sauce, and combinations thereof.

10. A reheatable frozen food product according to any one of Claims 1 to 9, wherein at least one of the first cheese-containing layer and the second cheese-containing layer each independently comprises a cheese form selected from sliced, shredded, shaved, flaked, powdered, crumbed, slabbed, and creamed.

11. A reheatable frozen food product according to any one of Claims 1 to 10, wherein the first cheese-containing and the second cheese-containing layer each comprises a cheese which is independently selected from the group consisting of process cheese-containing, cheddar cheese, Swiss cheese, American cheese, Provolone cheese, mozzarella cheese, Parmesan cheese, blue cheese, Monterey Jack cheese, Romano cheese, cream cheese, Havarti cheese, Gouda cheese, Muenster cheese, Asiago cheese, Gorgonzola cheese, and combinations thereof.

12. A reheatable frozen food product according to any one of Claims 1 to 11, wherein at least one of the first protein-containing layer and the second protein-containing layer comprises meat.

13. A reheatable frozen food product according to Claim 12, wherein at least one of the first protein-containing layer and the second protein-containing layer comprises meat which is independently selected from the group consisting of beef, pork, poultry, fish, and combinations thereof.

14. A reheatable frozen food product according to any one of Claims 1 to 11, wherein at least one of the first protein-containing layer and the second protein-containing layer comprises a soy product.

15. A reheatable frozen food product according to any one of Claims 1 to 14, wherein at least one of the first protein-containing layer and the second protein-containing layer each independently comprises a form selected from sliced, shaved, shredded, chopped, and pattied.

16. A reheatable frozen food product according to any one of Claims 1 to 15, wherein the bread slices each are independently selected from the group consisting of white bread, brown bread, whole wheat bread, oat bran, sourdough bread, rye bread, Hawaiian bread, pumpernickel bread, baguette, soda bread, corn bread, foccacia bread, and naan bread.

17. A reheatable frozen food product according to any one of Claims 1 to 16, wherein the filling further comprises vegetable material disposed between at least one of the sides of the condiment layer, and i) both the first protein-containing layer and first cheese-containing layer, and or ii) both the second protein-containing layer and second cheese-containing layer.

18. A reheatable frozen food product according to Claim 17, wherein the vegetable filling material is selected from the group consisting of lettuce, water cress, tomato, peppers, onions, garlic, bean sprouts, cucumber, potato, zucchini, basil, kale, and combinations thereof.

19. A packaged microwaveable frozen sandwich, comprising:
a first toasted bread slice having a first contact surface;
a second toasted bread slice having a second contact surface;
an edible filling disposed between the first contact surface of the first toasted bread slice and the second contact surface of the second toasted bread slice, wherein the edible filling comprises a plurality of edible filling layers which include a condiment layer having opposite sides, and a first meat-containing layer and a first cheese-containing layer disposed between one of the opposite sides of the condiment layer and the first contact surface of the first toasted bread slice, and a second meat-containing layer and a second cheese-containing layer disposed between the other opposite side of the condiment layer and the second contact surface of the second toasted bread slice; and
a package containing the sandwich;
said layers being balanced with respect to rate of heating in response to exposure to microwave energy so that said layers will thaw at about the same rate when the sandwich is thawed in a microwave oven.

20. A process for preparing a sandwich comprising:
providing a first toasted bread slice having a first contact surface;
providing a second toasted bread slice having a second contact surface;
providing an edible filling between the first contact surface of the first toasted bread slice and the second contact surface of the second toasted bread slice, wherein providing the edible filling comprises providing a plurality of edible filling layers which include:
a central layer having high moisture content and comprising one or more components selected from the group comprising condiments, vegetables, fruits, seasonings, food additives, and other processed foods, and having opposite sides,
a first protein-containing layer and a first cheese-containing layer provided between one of the opposite sides of the central layer and the first contact surface of the first toasted bread slice, and
a second protein-containing layer and a second cheese-containing layer disposed between the other opposite side of the central layer and the second contact surface of the second toasted bread slice;
packaging said sandwich;
freezing said sandwich; and
thereafter reheating said sandwich in a microwave oven with said layers heating so that all layers are thawed, with said thawed toasted bread slices having textural characteristics similar to those of the toasted bread slices prior to freezing and thawing thereof, rather than becoming soggy.

21. The process of Claim 20, wherein providing the edible filling comprises juxtaposing the first protein-containing layer to the first contact surface of the first toasted bread slice, and disposing the first cheese-containing layer between the first protein-containing layer and the central layer.

22. The process of Claim 20 or 21, wherein providing the edible filling comprises juxtaposing the second protein-containing layer to the second contact surface of the second toasted bread slice, and disposing the second cheese-containing layer between the second protein-containing layer and the central layer.

23. The process of any one of Claims 20 to 22, wherein providing the edible filling comprises juxtaposing the first cheese-containing layer to the first contact surface of the first toasted bread slice, disposing the first protein-containing layer between the first cheese-containing layer and the central layer, and disposing a first particulate farinaceous material between the first cheese-containing layer and the first protein-containing layer.

24. The process of any one of Claims 20 to 23, wherein providing the edible filling comprises juxtaposing the second cheese-containing layer to the second contact surface of the second toasted bread slice, disposing the second protein-containing layer between the second cheese-containing layer and the central layer, and disposing a second particulate farinaceous material between the second cheese-containing layer and the second protein-containing layer.

25. The process of any one of Claims 20 to 24, wherein the central layer comprises at least about 14 wt.% moisture.

26. The process of any one of Claims 20 to 25, wherein said protein-containing layer comprises a meat layer and said central layer comprises one or more components selected from the group comprising ranch dressing, mustard, vinaigrette dressing, pickle relish, catsup, barbecue sauce, mayonnaise, butter, margarine, honey, olive oil, canola oil, salad dressing, spicy pepper sauce, and horseradish sauce.

27. The process of any one of Claims 20 to 26, wherein at least one of the first protein-containing layer and the second protein-containing layer comprises meat.

28. The process of any one of Claims 20 to 27, wherein the sandwich comprises a top and a bottom, and reheating the sandwich further comprises locating the first toasted bread slice at the bottom of the sandwich during the reheating, wherein the first toasted bread slice picks up about 5 to about 50 wt.% additional weight as moisture gain during the reheating.

29. The process of any one of Claims 20 to 28, wherein the sandwich comprises a top and a bottom, and reheating the sandwich further comprises locating the first toasted bread slice at the bottom of the sandwich during the reheating, wherein the first toasted bread slice picks up about 10 to about 33 wt.% additional weight as moisture gain during the reheating.
